# EUROPEAN PATENT SPECIFICATION

(11) **EP 2 095 998 B1**
(45) Date of publication and mention of the grant of the patent: **22.05.2019**
(21) Application number: 08102014.1
(22) Date of filing: 26.02.2008
(51) Int. Cl.: B60R 13/01, B60R 5/04

(54) **Cargo mat**
Frachtmatte
Tapis de coffre

(43) Date of publication of application: 02.09.2009
(73) Proprietor: Volvo Car Corporation, 405 31 Göteborg (SE)
(72) Inventor: Ekhem, Alexander, 519 90 Horred (SE)
(74) Representative: Zacco Sweden AB

(56) References cited:
- EP-A- 1 818 217
- DE-U1- 8 402 098
- GB-A- 2 022 029
- JP-A- 59 183 713
- JP-A- 2002 046 540
- JP-A- 2003 291 732

## Description

### TECHNICAL FIELD

The present invention relates to cargo mat according to the preamble of claim 1.

### BACKGROUND ART

Many estate vehicles are configured with a cargo or storage compartment disposed directly to the rear of the passenger compartment. The floor of the storage compartment is sometimes provided with a foldable hatch which in its raised position will act as a bag support. The foldable hatch is folded around a transverse axis of rotation and is arrested in the raised position by stabilizing means. A cavity is provided in space beneath the hatch, where e.g. grocery bags can be placed during driving.

On the floor of the storage compartment there is usually provided a cargo mat, which preferably is manufactured in a relatively stiff plastic material. The cargo mat covers practically the entire floor of the cargo compartment, this to protect the floor and to gather dirt and debris which come along with the luggage. In order to be able to fold the foldable hatch to the raised position, the cargo mat is provided with one transverse fold line principally in line with the transverse axis of rotation of the foldable hatch. To be able to open the foldable hatch and use the bag support, the cargo mat is folded along the fold line, whereafter the bag support is arrested in the raised position. The transverse fold line according to prior art is provided relatively close to a front edge of the cargo mat, which implies that the cargo mat in its raised position will protrude into an upward direction of the storage compartment. One problem with this is that the driver may get a limited view backwards via his rear view mirror during driving. A further problem is that the existing load cover attached to the side walls of the storage compartment and arranged to extend along an upper edge of the rear seat(s) may not be used, since the protruding cargo mat constitutes an obstacle when the existing load cover is extruded rearwards over the load floor.

DE 8402098 U1 discloses a cover for a storage compartment of a vehicle, where the cover comprises several parts and is foldable.

The aim of the invention is to provide an improved cargo mat intended to solve the problems caused the cargo mat blocking the rear view for the driver and preventing usage of an existing load cover when a bag support provided in the load floor is used.

### SUMMARY OF THE INVENTION

The above problems have been solved by a cargo mat according to the appended claims. It is an object of the invention to provide an improved cargo mat for a vehicle.

According to a preferred embodiment, the present invention relates to a cargo mat for a load floor of a storage compartment in a vehicle. The storage compartment is defined by opposed side walls, the load floor and a back rest of at least one back seat. The cargo mat is provided with folding means which comprises a first fold line arranged to allow folding of the cargo mat into a first position. Further, the folding means comprises at least a second fold line to allow a subsequent folding, of the cargo mat. The cargo mat in its folded state forms a load cover in the storage compartment.

Further, the first and second fold lines are arranged transverse to the longitudinal direction of the vehicle. The first and second fold lines are arranged to divide the cargo mat in first, second and third sections.

In its folded position the cargo mat is substantially C-shaped with the first, second and third sections in the folded state and the first and third sections are substantially parallel to each other.

The first and second fold lines are provided with first and second elongated cavities, which extend along the first and second fold lines.

In the folded state of the cargo mat, the second section is arranged to rest against a raised hatch in the load floor and a rear edge of the third section is arranged to rest against a lower surface of a cover of an extendable load cover provided in the storage compartment.

Further, the cargo mat is provided with projecting edges which have chamfered ends.

In another embodiment, in the folded state of the cargo mat, the third section is attached to said back rest, with attachment devices such as one or more straps.

In another embodiment, in the folded state of the cargo mat, the third section is arranged to rest on the existing luggage items.

According to another embodiment both the second and third sections of the cargo mat in its folded state are principally parallel with the raised hatch. Thus, the third section is folded backwards and downwards so that the lower surfaces of the second and third sections lie close to each other. This embodiment may be used when the stored objects provided in the front section of the storage compartment are of a height which not may be contained inside the folded cargo mat. But these objects might have a height which will be able to be contained below a drawn out extendable load cover. In this embodiment the folded cargo mat is arrested in its folded state and the folded cargo mat avoids to strike against the extendable load cover during driving on e.g. bumpy roads.

In another embodiment of the invention the cargo mat may be provided with more than two fold lines and thus as a logical consequence of this also more than three sections.

### BRIEF DESCRIPTION OF THE DRAWINGS

The invention will be described in detail with reference to the attached figures. It is to be understood that the drawings are designed solely for the purpose of illustration and are not intended as a definition of the limits of the invention, for which reference should be made to the appended claims. It should be further understood that the drawings are not necessarily drawn to scale and that, unless otherwise indicated, they are merely intended to schematically illustrate the structures and procedures described herein.
- Fig. 1: shows an isometric view of cargo or storage compartment of a vehicle provided with a cargo mat, in an unfolded state, according to the invention,
- Fig. 2: shows an isometric view of the cargo mat in a partial folded state,
- Fig. 3: shows an isometric view of the cargo mat in a folded state, and
- Fig. 4: shows an enlarged partial view A of folding means, according to Fig. 1.

### DETAILED DESCRIPTION

In the description below, various directions will be given with reference to a vehicle oriented in a forward driving direction. Example of such directions can be forward, rear, up, down etc. It should particularly be pointed out that the directions for a cargo mat are given with reference to a cargo mat provided in a flat and unfolded condition.

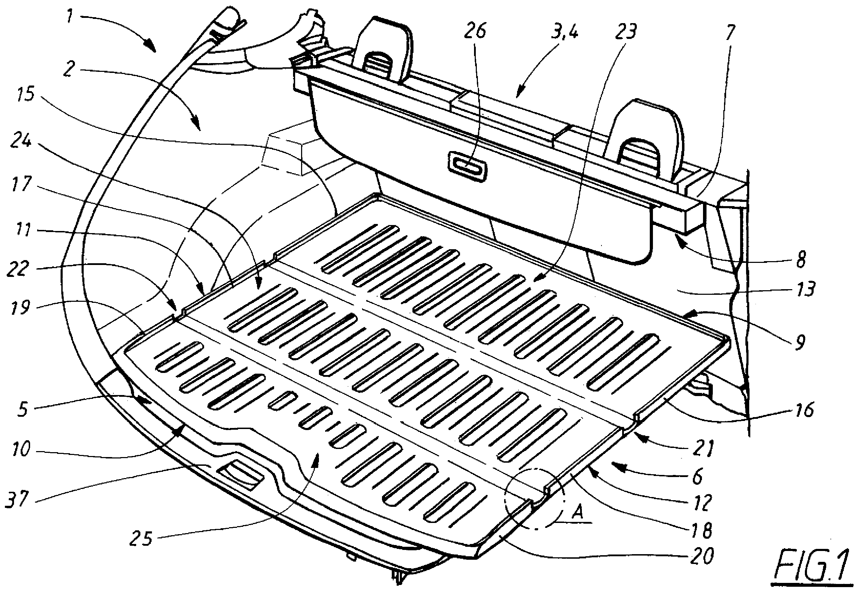

Fig. 1-3 shows isometric views of a cargo or storage compartment 1 of a vehicle. The storage compartment 1 is defined by opposed side walls 2, a back rest 3 of at least one back seat 4 and a load floor 5. The load floor 5 is provided with a cargo mat 6 to cover the entire floor of the cargo compartment 1, this to gather dirt and debris which come along with the luggage into the storage compartment 1.

In Fig. 1 the back seats 4 are shown which back seats 4 are a row of back seats 4 arranged close to each other but the back seats 4 can also be individual seats arranged apart from each other.

Along an upper edge 7 of the back rest 3 of the back seat 4 an extendable load cover 8 is provided stored on a roll extending transverse to the longitudinal direction of the vehicle. The extendable load cover 8 is provided to the rear of the head rests 3 of the back seats 4. In a stored state the extendable load cover 8 is rolled around the roll and in its active state the extendable load cover 8 is drawn out from the roll whereafter it is arrested with arresting means. In its active state the extendable load cover 8 will prevent a person situated outside the vehicle to view into the storage compartment 1. The extendable load cover 8 is provided with a handle 26, which is used to draw out the extendable load cover 8 from the stored state to the active state.

Further, the whole cargo mat 6 in its unfolded state is arranged on the load floor 5. The cargo mat 6 is manufactured in a piece and is provided with a front edge 9, a rear edge 10, a first side edge 11 and a second side edge 12. In the unfolded state the front edge 9 is situated in the vicinity of a rear side 13 of the back seats 4 and the rear edge 10 of the cargo mat 6 is situated in the vicinity of the rear part 37 of the load floor 5, close to a rear door of the vehicle. The first and second side edges 11, 12 of the cargo mat 6 are situated along the opposed side walls 2 of the storage compartment 1. Along the front edge 9, the rear edge 10, the first side edge 11 and the second side edge 12 there are provided projecting edges 15, 16, 17, 18, 19, 20 which will increase the stability of the cargo mat 6 and restrain debris and liquid, from the transported cargo, to spread into and soil the cargo compartment 1.

Further, the cargo mat 6 is provided with a first fold line 21 and a second fold line 22, by which folding of the cargo mat 6 can be accomplished. The first and second fold lines 21, 22 are arranged transverse to the longitudinal direction of the vehicle.

The first fold line 21 is arranged to allow folding of the cargo mat 6 into a first position, and the second fold line 22 is arranged to allow a subsequent folding of the cargo mat 6 into a folded state.

The first and second fold lines 21, 22 are arranged to divide the cargo mat 6 in a first section 23, a second section 24 and a third section 25. The first section 23 is arranged in the vicinity of the back rest 3 and the third section 25 is arranged in the vicinity of the rear door, and the second section 24 is arranged between the first and third sections. In the folded first position of the cargo mat 6 a first section 23 is arranged along the load floor 5, whereas second and third sections 24, 25 are angled essentially perpendicular to the first section 23.

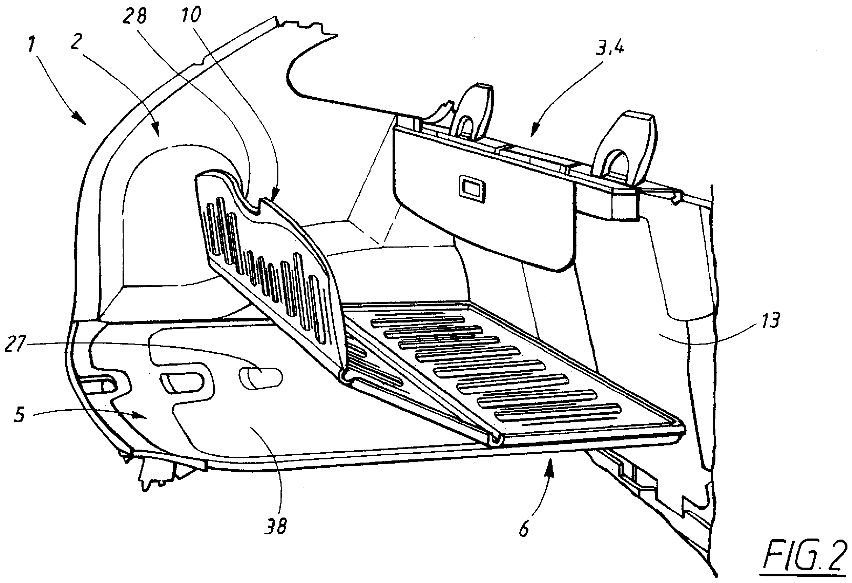

Fig. 2 shows an isometric view of the cargo mat according to Fig. 1, in a partial folded state. The cargo mat 6 is shown in a partial folded state to visualize the load floor 5 which is provided with a foldable hatch 38. The foldable hatch 38 is also provided with a handle 27 to allow the foldable hatch 38 to be lifted. The rear edge 10 of the cargo mat 6 is provided with a recess 28 to allow one part of a locking device in the rear door to mesh with another part of the locking device in the load floor 5. Thus, the load floor 5 is also foldable around an axis of rotation provided close to the rear side 13 of the back rest 3.

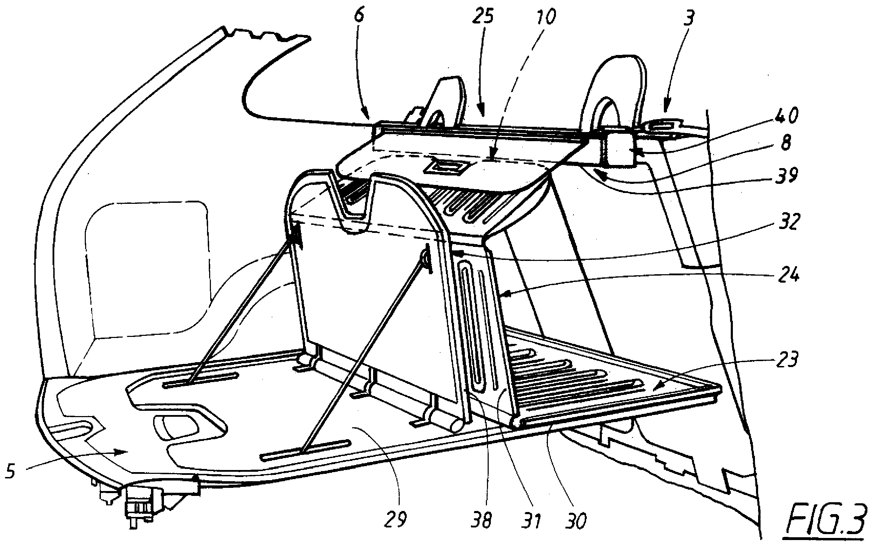

Fig. 3 shows an isometric view of the cargo mat 6 according to Fig. 1, in a folded state. The foldable hatch 38 in the load floor 5 can be raised from a stored position, on a level with the load floor 5, to a raised position, principally perpendicular to the load floor 5. Further, the foldable hatch 38 is arrested in the raised position with arresting means which preferably can be struts. The foldable hatch 38 in its raised position is intended for support during transport of e.g. grocery bags, which are placed in a cavity 29 of the load floor 5, which cavity 29 is arranged below the foldable hatch 38.

The cargo mat 6 is shown in its folded state, in which a lower surface 30 of the first section 23 is arranged to rest against the load floor 5, a lower surface 31 of the second section 24 is arranged to rest against an upper surface 32 of the raised hatch 38 and the rear edge 10 of the third section 25 is arranged to rest against a lower surface 39 of a cover 40 of the extendable load cover 8. In the folded state the cargo mat 6 is substantially C-shaped, and in which C-shape the first and third sections 23, 25 are substantially parallel to each other. The cargo mat 6 is maintained in its folded state by means of the support from the foldable hatch 38.

When the cargo mat 6 is substantially C-shaped, the cargo mat 6 can have a function of a load cover for those luggage items, in the storage compartment 1, which luggage items had to be moved to the front section of the storage compartment 1, in order to be able to open the foldable hatch 38.

When the cargo mat 6 is in its substantially C-shaped folded state, it is possible to extract the extendable load cover 8 from the roll, since the folded cargo mat 6 will be positioned below the extendable load cover 8.

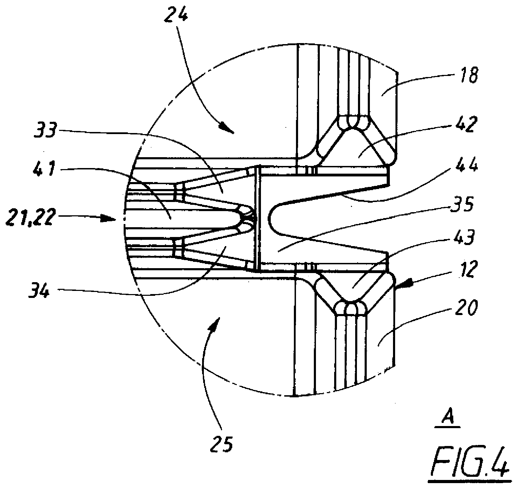

Fig. 4 shows an enlarged partial view A of the first or second fold lines 21, 22, according to Fig. 1. The first fold line 21 is situated between the first and second sections 23, 24 and the second fold line 22 between the second and third sections 24, 25. Each of the first and second fold lines 21, 22 are provided with first and second elongated cavities 33, 34, which wholly or partially extend along the first and second fold lines 21, 22. The first and second elongated cavities 33, 34 are tapered.

The first and second elongated cavities 33, 34 situated in the first and second fold lines 21, 22 are arranged to facilitate folding of the cargo mat 6 and between the first and second elongated cavities 33, 34 there are provided a uniting material strip 41.

The first and second sections 23, 24 are arranged to be angled in relation to each other to attain an essentially perpendicular angle between the first and second sections 23, 24. The second and third sections 24, 25 are arranged to be angled in relation to each other to attain an angle between the second and third sections 24, 25, which angle is larger than a perpendicular angle.

The cargo mat 6 is provided with projecting edges 15, 16, 17, 18, 19, 20 which extend along the front edge 9, the rear edge 10, the first side edge 11 and the second side edge 12. The projecting edges 15, 16, 17, 18, 19, 20 are arranged to extend to the first or second elongated cavities 33, 34 of the first and second fold lines 21, 22.

The projecting edges 15, 16, 17, 18, 19, 20 have chamfered ends 42, 43, this to facilitate folding of the cargo mat 6 and to avoid collision between the projecting edges 15, 16, 17, 18, 19, 20 in the folded state.

A space 35 is provided between the projecting edges 16, 18 and between the projecting edges 18, 20 and between the projecting edges 15, 17 and between the projecting edges 17, 19 of the first, second and third sections 23, 24, 25, this to bring about a folding of the cargo mat 6. The spaces 35 are partially of a thin material thickness and are arranged to bind together the area around the fold lines 21, 22 and the projecting edges 15, 16, 17, 18, 19, 20. Thus, the first and second elongated cavities 33, 34 are arranged to end before they reach the projecting edges 15, 16, 17, 18, 19, 20 of the cargo mat 6, this to free the space 35 to bring about a folding of the cargo mat 6. The spaces 35 are suitably provided with C-shaped notches 44.

According to another embodiment the cargo mat 6 can be maintained in its folded state by means of e.g. a crate which is placed to the rear of the cargo mat 6.

According to another embodiment the third section 25 of the cargo mat 6 in its C-shaped folded state is arranged to be attached to the back rest 3, with e.g. one or more straps.

According to another embodiment an upper surface 36 of the third section 25 of the cargo mat 6 in its C-shaped folded state is arranged to rest on the existing luggage items in the storage compartment 1.

## Claims

1. Cargo mat for a load floor of a storage compartment in a vehicle, which storage compartment (1) is defined by opposed side walls (2), the load floor (5) and a back rest (3) of at least one back seat (4), which cargo mat (6) is provided with folding means which comprises a first fold line (21) arranged to allow folding of the cargo mat (6) into a first position, where the folding means further comprises at least a second fold line (22) to allow a subsequent folding, of the cargo mat (6), where the cargo mat (6) in its folded state forms a load cover in the storage compartment (1), where the first and second fold lines (21, 22) are arranged transverse to the longitudinal direction of the vehicle, where the first and second fold lines (21, 22) are arranged to divide the cargo mat (6) in first, second and third sections (23, 24, 25), **characterized in that** in its folded position the cargo mat (6) is substantially C-shaped with the first, second and third sections (23, 24, 25) in the folded state and that the first and third sections (23, 25) are substantially parallel to each other, and that in its folded state the second section (24) is arranged to rest against a raised hatch (28) in the load floor (5).

2. Cargo mat according to claim 1, **characterized in that** the first and second fold lines (21, 22) are provided with first and second elongated cavities (33, 34), which extend along the first and second fold lines (21, 22).

3. Cargo mat according to claim 1 or 2, **characterized in that** the cargo mat (6) is provided with projecting edges (15, 16, 17, 18, 19, 20) which have chamfered ends (42, 43).

4. Cargo mat according to any of claims 1 to 3, **characterized in that** in its folded state a rear edge (10) of the third section (25) is arranged to rest against a lower surface (39) of a cover (40) of an extendable load cover (8) provided in the storage compartment (1).

5. Cargo mat according to any of claims 1 to 3, **characterized in that** in its folded state the third section (25) is attached to said back rest (3).

6. Cargo mat according to any of claims 1 to 3, **characterized in that** in its folded state the third section (25) is arranged to rest on the existing luggage items.

7. A vehicle **characterized in that** said vehicle comprises a cargo mat (6) as claimed in any of the preceding claims.

## Patentansprüche

1. Frachtmatte für eine Ladefläche eines Staufaches in einem Fahrzeug, wobei das Staufach (1) durch entgegengesetzte Seitenwände (2), die Ladefläche (5) und eine Rückenlehne (3) von zumindest einem Rücksitz (4) definiert ist, welche Frachtmatte (6) mit einem Faltmittel versehen ist, das eine erste Faltlinie (21) umfasst, die angeordnet ist, um ein Falten der Frachtmatte (6) in eine erste Position zu ermöglichen, wobei das Faltmittel ferner eine zweite Faltlinie (22) umfasst, um ein nachfolgendes Falten der Frachtmatte (6) ermöglicht, wobei die Frachtmatte (6) in ihrem gefalteten Zustand eine Lastüberdeckung in dem Staufach (1) bildet, wobei die erste und zweite Faltlinie (21, 22) quer zur Längsrichtung des Fahrzeugs angeordnet sind, wobei die erste und zweite Faltlinie (21, 22) angeordnet sind, um die Frachtmatte (6) in einen ersten, zweiten und dritten Abschnitt (23, 24, 25) einzuteilen, **dadurch gekennzeichnet, dass** die Frachtmatte (6) in ihrer gefalteten Position im Wesentlichen C-förmig mit dem ersten, zweiten und dritten Abschnitt (23, 24, 25) im gefalteten Zustand ist, und dass der erste und dritte Abschnitt (23, 25) zueinander im Wesentlichen parallel sind, und dass der zweite Abschnitt (24) in seinem gefaltetem Zustand angeordnet ist, um an einer angehobenen Klappe (28) in der Ladefläche (5) anzuliegen.

2. Frachtmatte nach Anspruch 1, **dadurch gekennzeichnet, dass** die erste und zweite Faltlinie (21, 22) mit einem ersten und zweiten länglichen Hohlraum (33, 34) versehen sind, die sich entlang der ersten und zweiten Faltlinie (21, 22) erstrecken.

3. Frachtmatte nach Anspruch 1 oder 2, **dadurch gekennzeichnet, dass** die Frachtmatte (6) mit vorspringenden Kanten (15, 16, 17, 18, 19, 20) versehen ist, die angeschrägte Enden (42, 43) aufweisen.

4. Frachtmatte nach einem der Ansprüche 1 bis 3, **dadurch gekennzeichnet, dass** in ihrem gefalteten Zustand eine Hinterkante (10) des dritten Abschnitts (25) angeordnet ist, um an einer unteren Fläche (39) einer Überdeckung (40) einer ausdehnbaren Lastüberdeckung (8) anzuliegen, die in dem Staufach (1) vorgesehen ist.

5. Frachtmatte nach einem der Ansprüche 1 bis 3, **dadurch gekennzeichnet, dass** in ihrem gefalteten Zustand der dritte Abschnitt (25) an der Rückenlehne (3) befestigt ist.

6. Frachtmatte nach einem der Ansprüche 1 bis 3, **dadurch gekennzeichnet, dass** in ihrem gefalteten Zustand der dritte Abschnitt (25) angeordnet ist, um auf den vorhandenen Gepäckteilen zu ruhen.

7. Fahrzeug, **dadurch gekennzeichnet, dass** das Fahrzeug eine Frachtmatte (6) nach einem der vorgehenden Ansprüche umfasst.

## Revendications

1. Tapis de cargaison pour un plancher de chargement d'un compartiment de stockage dans un véhicule, ledit compartiment de stockage (1) étant défini par des parois latérales opposées (2), le plancher de chargement (5) et un dossier (3) d'au moins un siège arrière (4), ledit tapis de cargaison (6) étant pourvu d'un moyen de pliage qui comprend une première ligne de pliage (21) agencée pour permettre le pliage du tapis de cargaison (6) dans une première position, dans lequel le moyen de pliage comprend en outre au moins une deuxième ligne de pliage (22) pour permettre un pliage ultérieur du tapis de cargaison (6), dans lequel le mat de cargaison (6) dans son état plié forme un couvercle de chargement dans le compartiment de stockage (1), dans lequel les première et deuxième lignes de pliage (21, 22) sont disposées transversalement à la direction longitudinale du véhicule, dans lequel les première et deuxième lignes de pliage (21, 22) sont agencées pour diviser le tapis de cargaison (6) en des première, deuxième et troisième sections (23, 24, 25), **caractérisé en ce que**, dans sa position pliée, le tapis de cargaison (6) est essentiellement en forme de C, les premier, deuxième et troisième sections (23, 24, 25) étant à l'état replié, et que les premier et troisième sections (23, 25) sont essentiellement parallèles les unes aux autres, et **en ce que**, dans sa position pliée, la deuxième section (24) est agencée pour reposer contre une trappe surélevée (28) dans le plancher de chargement (5).

2. Tapis de cargaison selon la revendication 1, **caractérisé en ce que** les première et deuxième lignes de pliage (21, 22) sont pourvues de première et deuxième cavités allongées (33, 34) qui s'étendent le long des première et deuxième lignes de pliage (21, 22).

3. Tapis de cargaison selon les revendications 1 ou 2, **caractérisé en ce que** le tapis de cargaison (6) est pourvu de bords en saillie (15, 16, 17, 18, 19, 20) ayant des extrémités chanfreinées (42, 43).

4. Tapis de cargaison selon l'une quelconque des revendications 1 à 3, **caractérisé en ce que**, dans son état plié, un bord arrière (10) de la troisième section (25) est agencé pour reposer contre une surface inférieure (39) d'un couvercle (40) d'un couvercle de chargement extensible (8) prévu dans le compartiment de stockage (1).

5. Tapis de cargaison selon l'une quelconque des revendications 1 à 3, **caractérisé en ce que**, dans son état plié, la troisième section (25) est fixée audit dossier (3).

6. Tapis de cargaison selon l'une quelconque des revendications 1 à 3, **caractérisé en ce que**, dans son état plié, la troisième section (25) est agencée pour reposer sur les bagages existants.

7. Véhicule, **caractérisé en ce que** ledit véhicule comprend un tapis de cargaison (6) selon l'une quelconque des revendications précédentes.
